# EUROPEAN PATENT APPLICATION

(11) **EP 2 460 735 A1**
(43) Date of publication of application: **06.06.2012**
(21) Application number: 11009581.7
(22) Date of filing: 05.12.2011
(51) Int. Cl.: B65D 8/20, B29C 57/00

(54) **External package for a pre-packaged product and production method of the same**

(30) Priority: 03.12.2010 IT MI20102243
(71) Applicant: SERILABEL SRL, 24064 Grumello Del Monte (BG) (IT)
(72) Inventor: Minuti, Ezio, 24064 Grumello del Monte (BG) (IT)

(57) **Abstract**

External package (10) comprising a polymeric tubular element (20) and a metal bottom (30), the polymeric tubular element (20) comprising a plurality of tongues (24) starting from a first end of the polymeric tubular element (20), the tongues (24) being substantially orthogonal to a first side (25) of the polymeric tubular element (20), the metal bottom (30) comprising a peripheral external groove (35), the tongues (24) being inserted into the peripheral external groove of the metal bottom (30), the same being mechanically constrained inside a first folded portion of the metal bottom (30).

Production method of the external package (10) comprising the following phases: a) realizing a plurality of cuts (23) in proximity of a first side (25) of a polymeric foil (22), so obtaining a plurality of tongues (24), g) folding a peripheral external free end (36) of a peripheral groove (35) on the tongues (24) against a bottom portion (37) of the groove (35), so obtaining a first folded portion in which the tongues (24) are mechanically constrained between the peripheral end (36) and the bottom portion (37).

## Description

The present invention relates to an external package for at least a product pre-packaged and to a production method of the same.

In particular the present invention relates to an external package for at least one pre-packaged product such as for example a bottle containing a liquid food or a plurality of candies.

Nowadays various types of external packages exist for at least one pre-packaged product.

A first type is completely made of a metallic material and has the drawback of a very high energy cost for producing the same, and also a relatively high weight, which affects the transport cost.

A second type is completely made of polymeric material, and has the drawback that it does not permit to have a great tensile stretch of the tubular portion with respect to the polymeric base portion, and therefore it is not suitable for a series of pre-packaged products having an high weight.

A further drawback is that this type also has often a series of breakages of the polymeric tubular portion, especially when the same is made of a fragile polymeric material, due to the stresses between the polymeric tubular portion and the polymeric base portion.

The aim of the present invention is to realize an external package for at least one pre-packaged product which is able to minimizes possible breakages of the polymeric side portion of the same and that at the same time which have an tensile stretch resistance.

Another aim is to realize a production method of an external package for at least one pre-packaged product which is versatile and efficient and that permits to produce in a very simple way said external package.

Still another aim is to provide an external package for at least one pre-packaged product and a production method of the same which permit to have an high tensile stretch resistance.

Still another aim is to provide an external package for at least one pre-packaged product and a production method of the same which permit to reduce the manufacturing costs and that at the same time permit high production rates.

Further aim is to provide an external package for at least one pre-packaged product and a production method of the same which are simple to realize and economically advantageous.

These aims according to the present invention are reached by realizing an external package for at least one pre-packaged product and a production method of the same, as explained in claims 1 and 8.

Further features of the invention are pointed out in the following claims.

The features and advantages of an external package for at least one prepacked product and of a production method of the same according to the present invention, will be more evident from the following exemplary and non limitative description, referred to the annexed schematic drawings, in which:

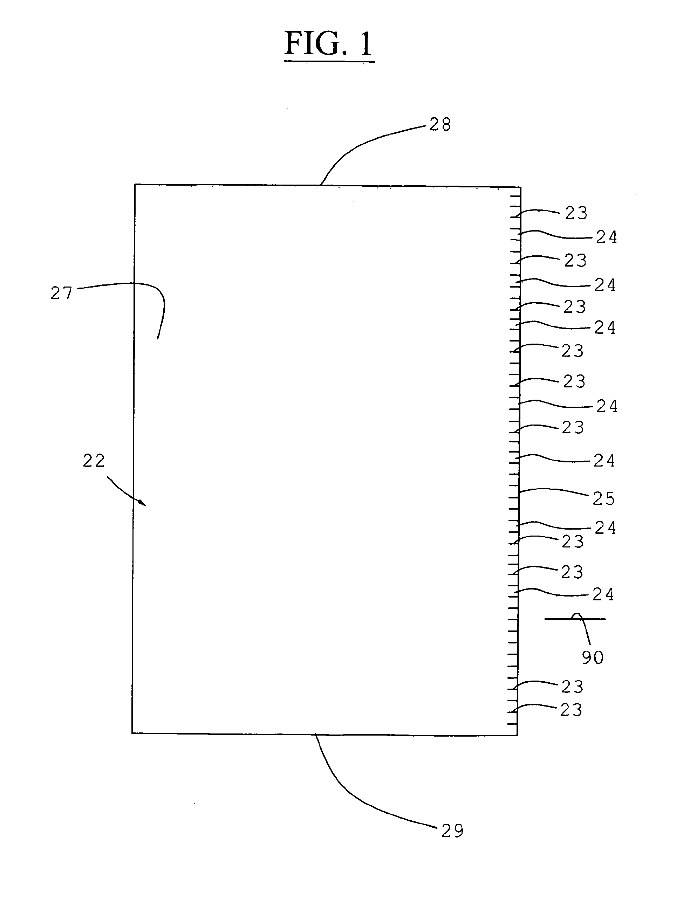

figure 1 is a top view of a preferred embodiment of a polymeric foil according to the present invention;

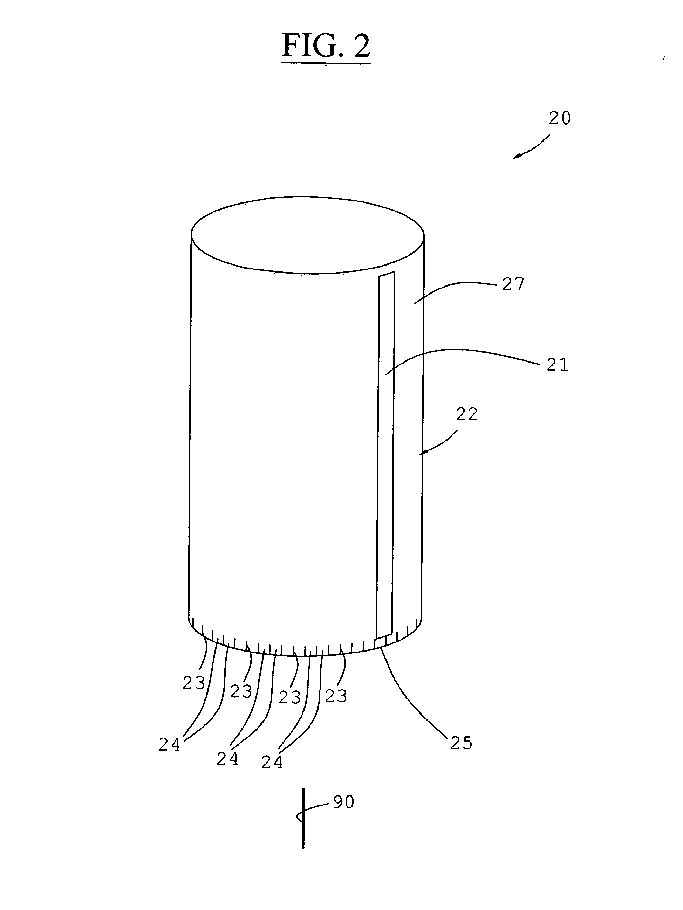

figure 2 is a perspective raised right side view of a preferred embodiment of a polymeric tubular element according to the present invention;

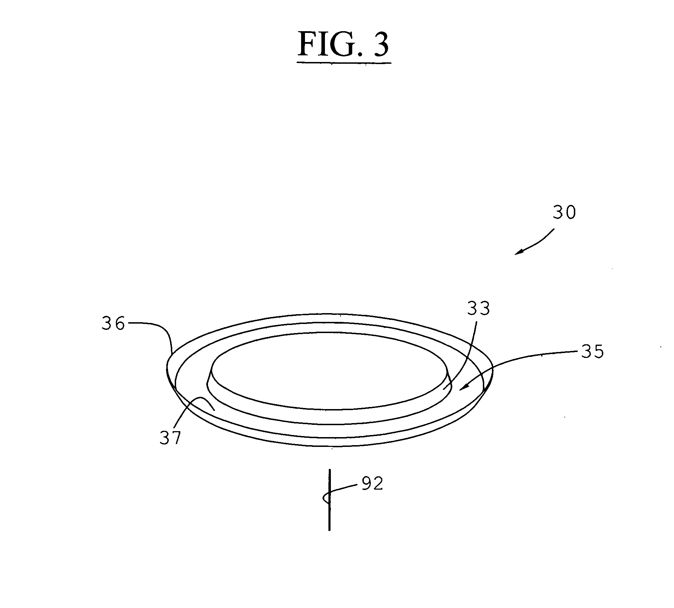

figure 3 is a perspective raised right side view of a preferred embodiment of a metal bottom according to the present invention;

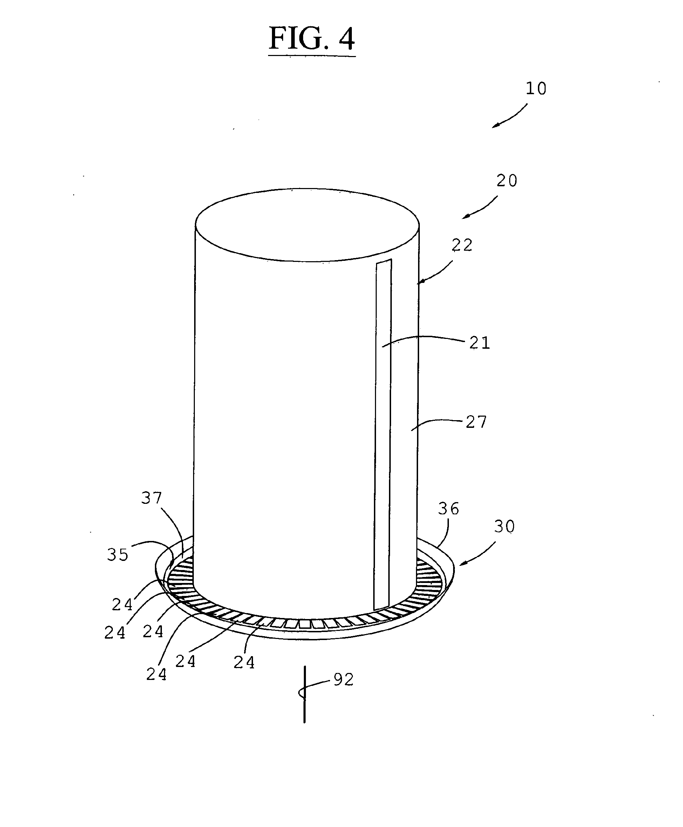

figure 4 is a perspective raised right side view of the polymeric tubular element of figure 2 and of the metal bottom of figure 3;

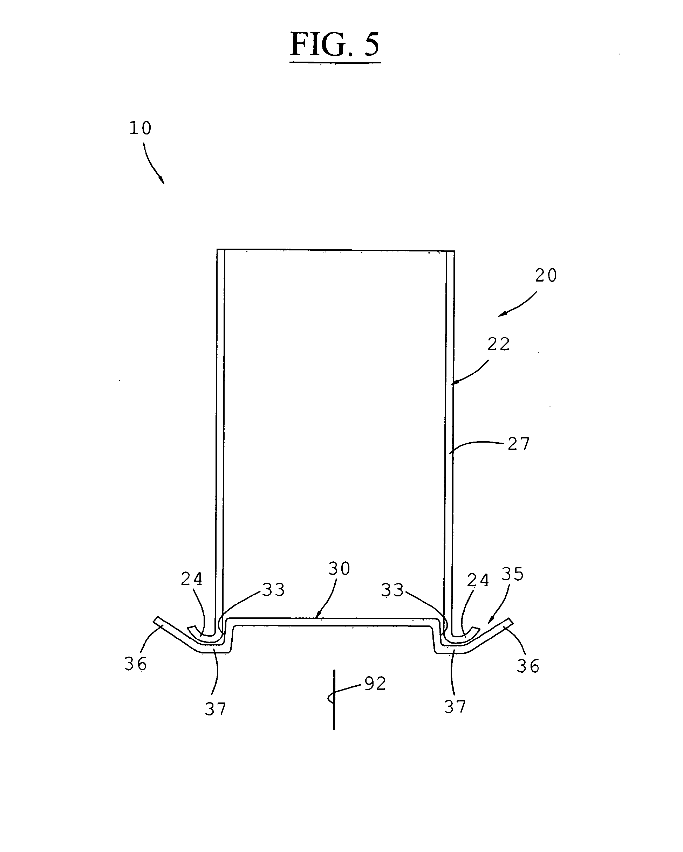

figure 5 is a sectioned view of figure 3 in a raised frontal view, showing a preferred embodiment of a phase of a production method of an external package for at least a pre-packaged product according to the present invention;

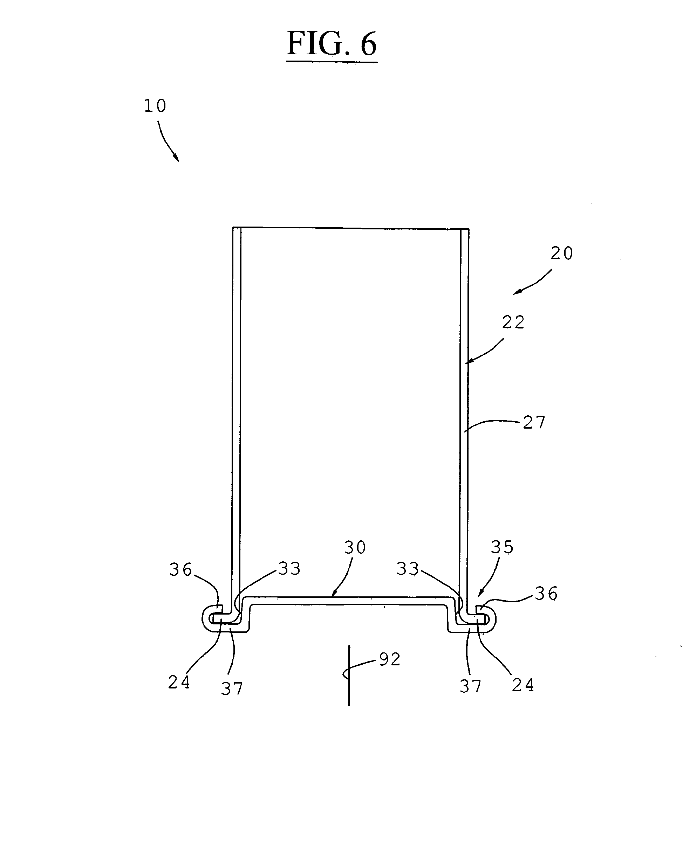

figure 6 is a raised frontal sectioned view which show another phase of a production method of an external package for at least one pre-packaged product according to the present invention;

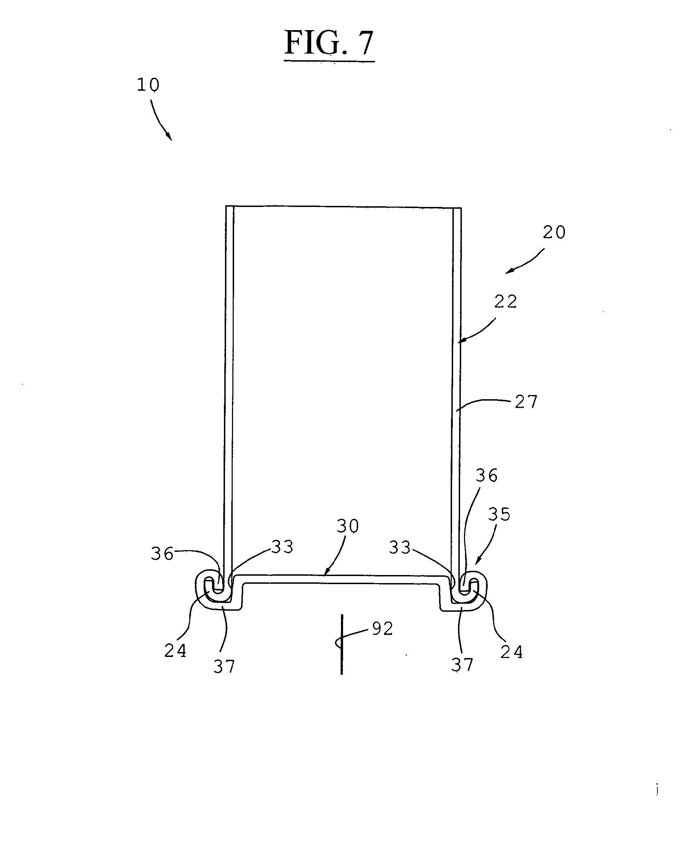

figure 7 is a raised frontal sectioned view which show another phase of a production method of an external package for at least one pre-packaged product according to the present invention.

With reference to the figures, an external package 10 for at least one pre-packaged product is shown, which comprises a polymeric tubular element 20, made in particular of a polymeric material having a brittle behaviour and preferably made of PET or of its alloys or its derivates, and a metal bottom 30.

According to the present invention said polymeric tubular element 20 comprises a plurality of tongues 24 which are realized starting from a first end 25 of said polymeric tubular element 20, preferably also starting from a second free end of said polymeric tubular element 20, furthermore said plurality of tongues 24 are substantially orthogonal with respect to a first side 25 of said polymeric tubular element 20.

Said metal bottom 30 comprises a peripheral external groove 35, said plurality of tongues 24 being inserted in said peripheral external groove 35 of said metal bottom 30 and furthermore said plurality of tongues 24 being mechanically constrained in a first folded portion of said metal bottom 30 which is obtained only by means of a plastic deformation of a peripheral external end 36 of said peripheral groove 35 against said plurality of polymeric tongues 24.

In particular, said plurality of tongues 24 are mechanically constrained in said peripheral groove 35 and in particular are mechanically constrained between said peripheral end 36 and a bottom portion 37 of said metal bottom 30.

Advantageously, this permits to have a greater stretch resistance of said polymeric tubular element 20 with respect to said metal bottom 30, and besides said external package 10 is very cheap, light, easy to produce and besides with a high reliability, as said plurality of tongues 24 distribute the mechanical stress, so avoiding the formation of breakages.

A further advantage is that in such a way it is possible to realize an external package 10 with a polymeric tubular element 20, made of a polymeric material having a brittle behaviour, so avoiding possible breakages or fractures of the same, and therefore obtaining a very rigid and at the same time non fragile external package 10.

In particular, said first folded portion of said metal bottom 30 is substantially U-shaped.

Advantageously, this permits to have a greater stretch resistance and also minimizes a possible fracture of said polymeric tubular element 20, as said plurality of tongues 24 are constrained in a very symmetric way with respect to a symmetry axis 92 of said metal bottom 30.

Preferably, said peripheral portion 36 of said metal bottom 30 comprises a second metal portion which is wrapped on itself or in particular folded on itself for a plurality of times, and in which said plurality of tongues 24 of said polymeric tubular element 20 are respectively wrapped or folded.

Advantageously this permits a significant increase of the stretch resistance of said polymeric tubular element 20 with respect to said metal bottom 30.

Said plurality of tongues 24 are preferably uniformly distributed in a perimeter of said peripheral groove 35 of said metal bottom, and also is substantially and symmetrically constrained with respect to a symmetry axis 92 of said metal bottom 30.

Advantageously, this permits to better distribute the stresses between said polymeric tubular element 20 and said metal bottom 30, consequently minimizing a possible fracture of said polymeric tubular element 20 and therefore also a breakage of said external package 10.

Preferably, said polymeric tubular element 20 is substantially symmetric, and in particular it is axial symmetric, with respect to a symmetry axis 92 of said metal bottom 30, in particular said polymeric tubular element 20 has a substantially circular section or a substantially regular polygonal section, having a plurality of rounded corners with a minimum connection radius of 1 cm, in order to better distribute the stresses with said metal bottom 30.

Preferably, said peripheral groove 35 is substantially symmetric, and in particular it is axial symmetric, with respect to a symmetry axis 92 of said metal bottom 30.

Advantageously, this permits to even better distribute the stresses between said polymeric tubular element 20 and said metal bottom 30.

Preferably, a proximal portion of said polymeric tubular element 20, which is positioned in proximity to said plurality of tongues 24 is mechanically constrained between an inner side wall 33 of said groove 35 and said first folded portion of said metal bottom 30, in order to advantageously constrain in a very stable way said polymeric tubular element 20 with said metal bottom 30.

Advantageously, this confers to said external package 10 a greater stretch resistance, as in order to disengage said tubular element 20 from said metal bottom 30 a very great force is necessary.

Preferably, said peripheral groove 35 of said metal bottom 30 comprises an inner surface, having a great surface roughness, and in particular said inner surface is an inner embossed surface or preferably an inner sand-blasted surface.

Advantageously, in this way it is possible to easily increase the friction between said plurality of tongues 24 and said peripheral groove 35, so increasing at the same time the mechanical resistance of said external package 10, with a very cheap operation.

Preferably, said polymeric tubular element 20 is made of a polymeric foil 22 comprising a second side 28 and a third side 29 mutually overlapped and orthogonal to said first side 25, said polymeric tubular element 20 also comprises a polymeric weld which join in a single piece said second side 28 to said third side 29.

Advantageously, this permits to obtain a polymeric tubular element made of a single resistant and at the same time flexible piece, without using metal elements constraining said second side 28 with said third side 29, which could not be compatible for example with food products, inserted into said external package 10.

Advantageously, this permits to obtain an external package 10 with different types of sections or lengths in an easy and cheap way.

Preferably, said metal bottom 30 is made with a thin aluminium sheet, so being advantageously light, easily deformable and completely recyclable.

Preferably, said metal bottom 30 is made with an iron sheet externally coated with a thin layer of tin, so being advantageously deformable, cheap and completely recyclable.

Preferably, said polymeric tubular element 20 is made of a polymeric material chosen between polyethylene-thereftalate PET or its alloys, or similar, polyvinyl-chloride PVC or its alloys or similar, polymethyl-metachrilate PMMA or its alloys or similar.

Advantageously, this permits to obtain a very resistant and at the same time very light external package 10.

In particular, said polymeric tubular element 20 is made of a polymeric material chosen between polyethylene-terephtalate PET or its alloys or similar.

Preferably, said polymeric tubular element 20 has at least one lenticular image comprising at least two images, which is realized on an external lateral surface 27 of said polymeric tubular element 20.

Advantageously, this avoids that a shock or a surface rubbing, for example with another external package 10 or another object, which could damage or alter an image and/or at least one writing made on said external package 10, so minimizing the external packages with a low-quality finish, as in this way it is reduced the number of external packages that at the end of a transport could not be usable.

Preferably, said at least one lenticular image is made of a plurality of lenticular images, which realize three-dimensional effects, such as for example a stereoscopic 3D effect, or a "morphing" effect, or a "zoom" effect or a movement effect or a movie film or a commutation effect from an image to at least another image.

Preferably, said plurality of lenticular images comprises at least 15 lenticular images, and in particular at least 90 lenticular images, which realize a movie film of some seconds as for example a short advertising spot, so advantageously avoiding the need for electronic and supply means.

Preferably, said external package 10 comprises a second metal element, not shown in figures, in particular a metal lip constrained to a second free end of said polymeric tubular element 20, which is opposed to said metal bottom 30.

Preferably, said second metal element is made with the same material of said metal bottom 30, and has also has a circular ring shape, which is in particular folded on said second free end in which in particular a second plurality of tongues 24 is realized in order to permit a better mechanical resistance.

Preferably, said second metal element comprises two metal flanges, mutually coupled near said second free end of said polymeric tubular element 20, which constrain between them said polymeric tubular element.

In particular, said second metal element comprises a metal closure, which can be opened by means of a pull-tab, advantageously in order to permit a better maintenance of said at least one pre-packaged product at the inside of said external package 10.

Preferably, said external package 10 also comprises a preferably metal cap, which can be coupled with said second metal element.

According to another aspect of the present invention, a production method of an external package 10 for at least one pre-packaged product is provided, wherein said external package 10 comprises a polymeric tubular element 20 made with a polymeric foil 22, preferably realized with PET or its alloys or its derivates, and also comprising a metal bottom 30.

According to the present invention, said method comprises a phase of a) making a plurality of cuts 23 in proximity of a first side 25 of said polymeric foil 22, so obtaining a plurality of tongues 24, said plurality of cuts 23 being substantially orthogonal to said first side 25, and also being substantially parallel to a longitudinal direction 90.

In particular, said longitudinal direction 90 is orthogonal to said first side 25 of said polymeric foil 22.

Said method comprises a phase of d) stamping said metal bottom 30 and realizing at the same time a peripheral groove 35 in proximity of an external edge of the same, said peripheral groove 35 being substantially symmetric and in particular axial symmetric, with respect to a symmetry axis 92 of said metal bottom 30.

Preferably, said method comprises a phase of c) making coaxial said polymeric tubular element 20 and said metal bottom 30, in particular with respect to said symmetry axis 92, and also a phase of f) positioning said plurality of tongues 24 of said polymeric tubular element 20 inside said peripheral groove 35 of said metal bottom 30.

According to the present invention, said method comprises a phase of g) folding an external free peripheral end 36 of said peripheral groove 35 on said plurality of tongues 24 by pressing the same against said groove 35, in particular against a bottom portion 37 of said groove 35, so obtaining a first folded portion in which said plurality of tongues 24 are mechanically constrained inside said peripheral groove 35 and in particular are mechanically constrained between said peripheral end 36 and said bottom portion 37.

In particular, said phase g) comprises a phase of i) deforming plastically with a substantially U-shape said peripheral end 36.

Advantageously, this permits to provide a greater stretch resistance and also to minimize a possible fracture of said polymeric tubular element 20, as said plurality of tongues 24 are constrained in an extremely symmetric way with respect to a symmetry axis 92 of said metal bottom 30.

In particular, said phase g) comprises a phase of j) radially wrapping on itself said first folded portion towards an inner side wall 33 of said peripheral groove 35 of said metal bottom 30, so obtaining a second metal portion wrapped on itself.

Advantageously, in this way at the end of said phase j) said plurality of tongues 24 are also wrapped and constrained inside said metal wrapped portion and at the same time also inside said first folded portion, mechanically constraining in a very stable and reliable way said polymeric tubular element 20 with said metal bottom 30, with a rapid, cheap and easily repeatable and automated phase.

Preferably said phase g) comprises a phase of k) folding at least once on itself, in particular at least a plurality of times, said first folded portion towards an inner lateral wall 33 of said peripheral groove 35 of said metal bottom 30, so obtaining a second folded metal portion.

Advantageously, in this way at the end of said phase k) said plurality of tongues 24 are also constrained between said first and second metal folded portions, so determining an even greater stretch resistance of said polymeric tubular element 20 with respect to said metal bottom 30, with a rapid, cheap production phase, which can also be repeated and automated.

Said method preferably comprises a phase of m) folding said first folded portion against an inner lateral wall 33 of said groove 35, in order to advantageously constrain in a very stable way said polymeric tubular element 20 with said metal bottom 30.

Advantageously, this provides to said external package 10 a greater stretch resistance, as in order to disengage said tubular element 30 from said metal bottom 30 a very great force is needed.

This also provides said external package 10 with a high reliability and permits to insert inside it at least one pre-packaged product, having a great weight, as for example a bottle of approximately 5 kg.

Preferably said phase m) comprises a phase of n) substantially rotating of around 90° said first folded portion against an inner lateral wall 33 of said groove 35.

Advantageously, in this way it is possible to further increase the mechanical resistance of said external package 10.

Preferably, this method comprises a phase of p) surface roughening said peripheral groove 35 of said metal bottom 30 after said phase d), so obtaining a peripheral groove 35 having a great surface roughness.

Advantageously, in this way it is possible to easily increase the friction between said plurality of tongues 24 and said peripheral groove 35, consequently increasing the mechanical resistance of said external package 10 with a very cheap operation.

Furthermore, said method comprises a phase of b) mutually overlapping a second side 28 and a third side 29 of said polymeric foil 22 which are adjacent to said first side 25 of said polymeric foil 22, and also a phase of e) welding said second side 28 to said third side 29 of said polymeric foil 22.

Preferably, said phase c) provides to welding with a high frequency, and in particular by means of ultrasound said second side 28 to said third side 29 of said polymeric foil 22.

Advantageously, this permits to obtain a polymeric tubular element realized with a single resistant and at the same time flexible piece, without the need of metal elements constraining said second side 28 with said third side 29, which could not be compatible for example with food products, inserted into said external package 10.

Advantageously, this permits to obtain an external package 10 with different types of sections and lengths in a simple and cheap way.

Preferably, said metal bottom 30 is made with a thin aluminium sheet, advantageously in order to be light, easily deformable and completely recyclable.

Preferably said metal bottom 30 is made with an iron sheet externally coated with a thin layer of tin, advantageously in such a way to be easily deformable, cheap and completely recyclable.

Preferably, said polymeric tubular element 20 is made with a polymeric material, chosen between polyethylene-teraftalate PET or its alloys or similar, polyvinyl-chloride PVC or its alloys or similar, polymetyl metacrylate PMMA or its alloys or similar.

Preferably, said polymeric tubular element 20 comprises at least one lenticular image comprising at least two images, which is realized on an external lateral surface 27 of said polymeric tubular element 20.

Advantageously, this avoids that for example a shock or a surface rubbing can damage or alter an image, and/or at least one writing made on such external package 10, so minimizing the external packages with a low-quality finish, and hence reducing the number of external packages which at the end of a transport could be not usable.

Preferably, said at least one lenticular image is a plurality of lenticular images, which realize three-dimensional effects, such as for example a stereoscopic 3D effect, or a "morphing" effect or a "zoom" effect, or a movement or a commutation effect from one image to at least another one.

So it has been seen that an external package for at least one pre-packaged product and a method for producing the same according to the present invention realize the previously evidenced aims.

The external package for at least one pre-packaged product and the production method of the same according to the present invention so provided are susceptible of various changes and variants, all within the same inventive concept.

Furthermore, in practice the used materials and also their sizes and components could be of any kind, according to the technical needs.

## Claims

1. An external package (10) for at least one pre-packaged product, which comprises a polymeric tubular element (20) and a metal bottom (30), **characterized in that** said polymeric tubular element (20) comprises a plurality of tongues (24) which are realized starting from a first end of said polymeric tubular element (20), furthermore said plurality of tongues (24) being substantially orthogonal to a first side (25) of said polymeric tubular element (20), said metal bottom (30) comprising a peripheral external groove (35), said plurality of tongues (24) being inserted in said peripheral external groove (35) of said metal bottom (30) and also said plurality of tongues (24) being mechanically constrained in a first folded portion of said metal bottom (30).

2. The external package (10) according to claim 1, **characterized in that** said peripheral portion (36) of said metal bottom (30) comprises a second metal portion which is wrapped on itself and inside which said plurality of tongues (24) of said polymeric tubular element (20) are respectively wrapped and folded, furthermore a proximal portion of said polymeric tubular element (20) which is in proximity of said plurality of tongues (24) is mechanically constrained between an inner lateral wall (33) of said groove (35) and said first folded portion of said metal bottom (30).

3. The external package (10) according to claim 1 or 2, **characterized in that** said plurality of tongues (24) are uniformly distributed within a perimeter of said peripheral groove (35) of said metal bottom, and also are substantially and symmetrically constrained respect to a symmetry axis (92) of said metal bottom (30), furthermore said peripheral groove (35) being substantially symmetric respect to a symmetry axis (92) of said metal bottom (30), said polymeric tubular element (20) having a substantially round section or a substantially regular polygonal section, with a plurality of rounded corners with a minimum connecting radius of 1 cm, in order to better distribute the stresses with said metal bottom (30).

4. The external package (10) according to any of claims 1 to 3, **characterized in that** said polymeric tubular element (20) is realized with a polymeric foil (22) comprising a second side (28) and a third side (29), mutually overlapped and orthogonal with respect to said first side (25), said polymeric tubular element (20) also comprising a polymeric weld which join in a single piece said second side (28) with said third side (29).

5. The external package (10) according to any of claims 1 to 4, **characterized in that** said polymeric tubular element (20) is realized with a polymeric material chosen between polyethilene-tereftalate PET or its alloys or similar, polyvinyl-chloride PVC or its alloys or similar, polymethil-metacrylate PMMA or its alloys or similar.

6. The external package (10) according to any of claims 1 to 5, **characterized in that** said polymeric tubular element (20) comprises at least one lenticular image comprising at least two images, which is realized on an external lateral surface (27) of said polymeric tubular element (20), said at least one lenticular image is a plurality of lenticular images which realize 3D effects, such as for example a stereoscopic 3D effect, or a "morphing" effect, or a "zoom" effect or a movement effect or a commutation effect from one image to the other one.

7. The external package (10) according to any of claims 1 to 6, **characterized by** comprising a second metal element constrained to a second free end of said polymeric tubular element (20), and opposed to said metal bottom (30).

8. A production method of an external package (10) for at least one pre-packaged product, in which said external package (10) comprises a polymeric tubular element (20) made with a polymeric foil (22) and also comprising a metal bottom (30), said method being **characterized by** comprising the following phases: a) making a plurality of cuts (23) in proximity of a first side (25) of said polymeric foil (22) so obtaining a plurality of tongues (24), said plurality of cuts (23) being substantially orthogonal to said first side (25) and also being substantially parallel to a longitudinal direction (90); d) stamping said metal bottom (30) and realizing at the same time a peripheral groove (35) in proximity of an external edge of the same, said peripheral groove (35) being substantially symmetric with respect to a symmetry axis (92) of said metal bottom (30); g) folding an external peripheral free end (36) of said peripheral groove (35) on said plurality of tongues (24), by pressing the same against said groove (35), in particular against a bottom portion (37) of said groove (35), so obtaining a first folded portion, in which said plurality of tongues (24) are mechanically constrained into said peripheral groove (35) and in particular are mechanically constrained between said peripheral groove (36) and said bottom portion (37).

9. The method according to claim 8, **characterized in that** said phase g) comprises a phase of j) radially wrapping on itself said first folded portion towards an inner lateral wall (33) of said peripheral groove (35) of said metal bottom (30), so obtaining a second metal portion wrapped on itself.

10. The method according to claim 8 or 9, **characterized in that** said phase g) comprises a phase of k) folding at least once on itself, in particular at least a plurality of times, said first folded portion towards an inner lateral wall (33) of said peripheral groove (35) of said metal bottom (30), so obtaining a second folded metal portion.

11. The method according to any of claims 8 to 10, **characterized in that** it comprises a phase of m) folding said first folded portion against an inner lateral wall (33) of said groove (35).

12. The method according to any of claims 8 to 11, **characterized by** comprising a phase of p) surface roughening said peripheral groove (35) of said metal bottom (30) after to said phase d), so obtaining a peripheral groove (35) having a great surface roughness.

13. The method according to any of claims 8 to 12, **characterized by** comprising a phase of b) mutually overlapping a second side (28) with a third side (29) of said polymeric foil (22) which are adjacent to said first side (25) of said polymeric foil (22), and also a phase of c) mutually welding said second side (28) and said third side (29) of said polymeric sheet (22); furthermore said phase c) includes to making a weld with a high frequency of said second side (28) to said third side (29) of said polymeric sheet (22).

14. The method according to any of claims 8 to 13, **characterized in that** said polymeric tubular element (20) is realized with a polymeric material, chosen between polyethylene-theraftalate PET or its alloys or similar, polyvinyl-chloride PVC or its alloys or similar, polymethil-metacrilate PMMA or its alloys or similar.

15. The method according to any of claims 8 to 14, **characterized in that** said polymeric tubular element (20) comprises at least one lenticular image, comprising at least two images, which is realized on an external lateral surface (27) of said polymeric tubular element (20), said at least one lenticular image being a plurality of lenticular images which realize 3D effects, such as for example a stereoscopic 3D effect, or a "morphing" effect, a "zoom" effect, a movement effect or a commutation effect from one image to at least another one.
